# DEMANDE DE BREVET EUROPEEN

(11) **EP 1 515 293 A1**
(43) Date de publication de la demande: **16.03.2005**
(21) Numéro de dépôt: 04292151.0
(22) Date de dépôt: 07.09.2004
(51) Int. Cl.: G08G 1/16, G01S 13/93, B60Q 1/08, B61L 23/04, G06T 7/00

(54) **Dispositif de détection d'obstacle comportant un système d'imagerie stéréoscopique incluant deux capteurs optiques**

(30) Priorité: 11.09.2003 FR 0310718
(71) Demandeur: VALEO VISION, 93012 Bobigny Cédex (FR)
(72) Inventeur: Ravier, Jean-Paul, 94100 Saint Maur des Fosses (FR); Lelève, Joel, 93800 Epinay sur Seine (FR)

(57) **Abrégé**

La présente invention concerne un dispositif de détection d'obstacle comportant un système d'imagerie stéréoscopique incluant deux capteurs optiques (1, 1') caractérisé en ce que les capteurs sont intégrés dans des moyens d'éclairage (100, 10, 10') et/ou de signalisation pour véhicule automobile.

## Description

L'invention concerne un dispositif de détection d'obstacle comportant un système d'imagerie stéréoscopique incluant deux capteurs optiques.

De manière connue, un système d'imagerie stéréoscopique permet la détection d'obstacles par l'association d'images vidéo issues de deux cameras espacées d'une distance connue. Les écarts entre les détails des deux images permettent de calculer la position des objets placés dans le champ d'analyse.

D'un point de vue structurel, les deux caméras sont liées mécaniquement à un même support. Cet assemblage monolithique est disposé usuellement dans la partie supérieure du pare-brise, à proximité du rétroviseur interne de la voiture, pour protéger les objectifs des caméras des salissures ou autres agents extérieurs et bénéficier du nettoyage des essuie-glaces.

Toutefois, les phénomènes de condensations, fréquents sur le pare-brise, se retrouvent partiellement sur les objectifs des capteurs et les rendent temporairement inexploitables.

En outre, il est difficile d'occuper un espace important sur le pare brise, pour des raisons de sécurité évidentes, autant pour la visibilité que pour les risques d'impacts. Ceci conduit à limiter l'écart entre les caméras et à réduire ainsi la précision.

La présente invention a pour but de fournir un dispositif de détection d'obstacle par un système d'imagerie stéréoscopique comportant deux capteurs optiques, dispositif compatible avec les critères de sécurité, facilement intégrable et de préférence avec une sensibilité accrue.

A cet effet, l'invention propose un dispositif de détection d'obstacle comportant un système d'imagerie stéréoscopique incluant deux capteurs optiques caractérisé en ce que les capteurs sont intégrés dans des moyens d'éclairage et/ou de signalisation pour véhicule automobile.

Les capteurs optiques ainsi placés dans les moyens d'éclairage et/ou de signalisation fournissent davantage de sécurité. Leur intégration est facile à réaliser et avec un plus grand degré de liberté qu'au niveau du pare brise.

Les capteurs sont par exemple intégrés dans les projecteurs des feux de route, dans les projecteurs code standard, dans des codes tournant de type DBL (Dynamic Bending Light en anglais), dans des projecteurs fixes à fonction virage de type FBL (Fixed Bending Light en anglais), ou encore dans les réflecteurs ou les systèmes dioptriques des moyens de signalisation (clignotants, feux stop...).

Les inconvénients de condensation rencontrés sur la face interne du pare-brise ou sur les objectifs, sont soit reportés sur certaines zones de glace non fonctionnelles des tels systèmes, soit simplement inexistants en raison de la présence possible de vernis anti-buée.

On attend par obstacle tout « élément » en déplacement relatif par rapport à la voiture, situé vers l'avant ou vers l'arrière du véhicule. Cet élément peut être mobile ou immobile, peut être un objet (voiture, moto, rocher..), un être vivant (piéton, animal) et même tout élément relatif à un changement climatique (pluie, brouillard, neige) ou environnemental (feu, fumée).

En effet, les applications de la détection d'obstacles sont vastes :
- détection de piéton de toute taille, d'un véhicule dangereux,
- détection d'un animal traversant la route,
- détection de l'arrivée brutale d'un voiture venant à l'arrière et apparaissant dans la zone de sécurité par exemple pour un déclenchement des « warning » et dans le cadre de l'ARS (Advance Rear Lighting System en anglais),
- détection d'un objet (véhicule, poteau) pendant une manoeuvre (créneau, sortie de garage) afin de fournir une assistance,
- détection de pluie, brouillard, neige par la mesure de la transmission de l'atmosphère.

Le véhicule automobile peut aussi bien être une voiture qu'un poids lourd.

Dans l'art antérieur, le dispositif de détection est très compact, de fait de sa position sur le pare brise, avec une distance entre les caméras de 10 à 20 cm.

Avantageusement, la distance entre les capteurs optiques selon l'invention est choisie supérieure à 50 cm et de préférence supérieure ou égale à 1 mètre.

Une telle distance permet d'améliorer sensiblement la précision de mesure de la distance de l'obstacle au véhicule.

De préférence, les capteurs optiques sont liés mécaniquement par une liaison virtuelle comprenant de moyens de synchronisation mécaniques et de préférence automatiques, par exemple logiciels.

Le schéma du système stéréoscopique usuel est ainsi modifié par suppression du lien mécanique direct entre les deux capteurs optiques et remplacé par la liaison virtuelle selon l'invention. Les moyens de synchronisation mécaniques maintiennent les parallélismes d'orientation verticale et horizontale des deux capteurs optiques nécessaires pour une détection d'obstacle par stéréoscopie fiable.

Dans un premier mode de réalisation préféré de l'invention, l'un des capteurs optiques est intégré dans des moyens d'éclairage et/ou de signalisation gauches et l'autre des capteurs optiques est intégré dans des moyens d'éclairage et/ou de signalisation droits.

Dans un deuxième mode de réalisation préféré de l'invention, l'un des capteurs optiques est solidaire d'un réflecteur mobile des moyens d'éclairage gauches et l'autre des capteurs optiques est solidaire d'un réflecteur mobile des moyens d'éclairage droits.

Les projecteurs sont des lieux privilégiés pour abriter des capteurs optiques.

Le dispositif peut comporter des moyens de gestion du calage vertical des capteurs optiques, de préférence automatiques, par exemple logiciels.

Lorsque les capteurs sont solidaires de réflecteurs mobiles en rotation dans le plan horizontal, des moyens de commande de la rotation dans le plan horizontal desdits réflecteurs peuvent être pilotés par lesdits moyens de gestion du calage vertical.

Ainsi, le parallélisme d'orientation vertical des capteurs optiques et aussi des projecteurs est garanti. Cela évite des moyens redondants et permet un gain en intégration et en coût.

De préférence, le dispositif de détection d'obstacles peut comprendre des moyens de correction d'images, avant l'exploitation des images pour la détection d'obstacles.

On emploie pour chaque capteur par exemple des logiciels de calage des images entre elles. Ces logiciels peuvent être utiles indépendamment et/ou en complément des moyens de synchronisation mécaniques des capteurs optiques, par exemple pour supprimer des erreurs dues à des vibrations ou des bougés dues à des changements de vitesse.

Dans un mode de réalisation avantageux, le dispositif de détection d'obstacle comprend des moyens de gestion du calage horizontal des capteurs optiques de préférence automatiques et par exemple logiciels.

Dans ce dernier mode, les moyens de gestion du calage horizontal peuvent comprendre des moyens de détermination des lignes d'horizon d'images de scènes de route prises par les deux capteurs et des moyens de détermination de la coïncidence desdites lignes d'horizon à partir d'une ligne de consigne prédéterminée.

Toujours dans ce dernier mode, les moyens de détermination des lignes d'horizon peuvent comprendre des moyens de recherche d'au moins des segments extrapolables de lignes fuyantes des images et, de préférence, deux générateurs de lignes lumineuses chacun associé à l'un distinct des capteurs et orientés de façon à ce que les lignes lumineuses soient placées entre les lignes fuyantes des images.

Par ailleurs, on sait que l'assiette d'un véhicule peut être modifiée en fonction de la situation dans laquelle se trouve le véhicule (accélération, freinage, etc.) et en fonction de la charge du véhicule. En effet, lorsque le véhicule est très chargé, alors l'arrière du véhicule est abaissé, ce qui implique que l'avant du véhicule est relevé. Le véhicule n'est donc plus parallèle à la route. On dit familièrement qu'il «lève le nez ». Dans ce cas, les faisceaux lumineux des projecteurs du véhicule sont dirigés vers l'horizon, au lieu d'être dirigés vers la route. Ils peuvent alors éblouir les conducteurs de véhicules venant en sens inverse.

Au contraire, lorsque le véhicule est en train de freiner, alors l'avant du véhicule bascule vers la route. Le véhicule n'est donc plus parallèle à la route. On dit familièrement qu'il «pique du nez ». Dans ce cas, les faisceaux lumineux des projecteurs de croisement éclairent la route juste devant le véhicule. Le conducteur du véhicule n'a alors plus une visibilité suffisante pour pouvoir appréhender la situation.

Ainsi, il est souhaitable de corriger l'orientation des projeteurs.

Aussi, lorsque les capteurs sont solidaires de réflecteurs mobiles en rotation dans le plan vertical, des moyens de commande automatiques de la rotation dans le plan vertical desdits réflecteurs sont pilotés par les moyens de gestion du calage horizontal.

De cette façon, le parallélisme d'orientation horizontal des capteurs optiques et aussi des projecteurs est garanti. Cela évite des moyens redondants et permet un gain en intégration et en coût.

Les capteurs optiques peuvent être choisis parmi des caméras, éventuellement infra rouge et donc adaptées à la vision de nuit, et des systèmes à laser.

Le dispositif de détection d'obstacle peut comprendre en outre des moyens de commande de l'un ou plusieurs des moyens suivants :
- des moyens de gestion du mouvement du véhicule, par exemple des actionneurs pour actions sur les freins ou sur la direction,
- des moyens pour l'anticipation de virage,
- des moyens de gestion de la position du véhicule par rapport aux bandes blanches soit pour assurer le suivi de voie par exemple sur autoroute.

Le dispositif de détection d'obstacle peut comprendre en outre des moyens de commande de l'un ou plusieurs des moyens suivants :
- des moyens d'avertissement sonores du conducteur et/ou de l'extérieur, en cas de risque potentiel,
- des moyens d'avertissement visuels (afficheurs) du conducteur et/ou de l'extérieur, en cas de risque potentiel,
- des moyens de réduire l'éblouissement potentiel du conducteur,
- des moyens de commande d'un élément de sécurité active interne et/ou externe, tel qu'un airbag,
- des moyens de commutation automatique de lampes, par exemple dans le cadre de l'AFS (Adaptive Front Lighting System en anglais), dans le cadre d'un allumage jour-nuit, dans le cadre d'une commutation entre un faisceau code et un faisceau route, ou encore dans le cadre d'un éclairage optimisé pour éviter l'éblouissement des autres conducteurs.

L'exploitation des capteurs optiques pour une pluralité de fonctions associées permet de réduire le coût unitaire de chacune de ces fonctions. Cela simplifie également les contraintes d'intégrations mécaniques et électriques.

D'autres caractéristiques et avantages de l'invention ressortiront encore de la description qui suit. Cette description est purement illustrative et non limitative. Elle doit être lue en regard des figures annexées parmi lesquelles :
- la figure 1 correspond à une représentation schématique de moyens d'éclairage de véhicule automobile intégrant deux capteurs optiques d'un système d'imagerie stéréoscopique d'un dispositif de détection d'obstacle conformément à un mode de réalisation préféré de l'invention ;
- la figure 2A représente un exemple d'image d'une scène de route située devant un véhicule dans un cas classique de route relativement plate ;
- la figure 2B représente l'image de la figure 2A après avoir été traitée ;
- les figures 3A et 3B représentent schématiquement deux cas d'éclairage sur la route des figures 2A et 2B ;
- la figure 4 montre une image traitée d'une scène de route dans le cas où un véhicule se trouve sur une route en fond de vallée ;
- la figure 5 montre une image traitée d'une scène de route traitée dans le cas où le véhicule se trouve au sommet d'une côte ;
- la figure 6 montre une image traitée d'une scène de route dans le cas où la prise de l'image a été gênée ;
- la figure 7 représente une image traitée d'une scène de route, dans le cas où sont projetées des lignes parallèles.

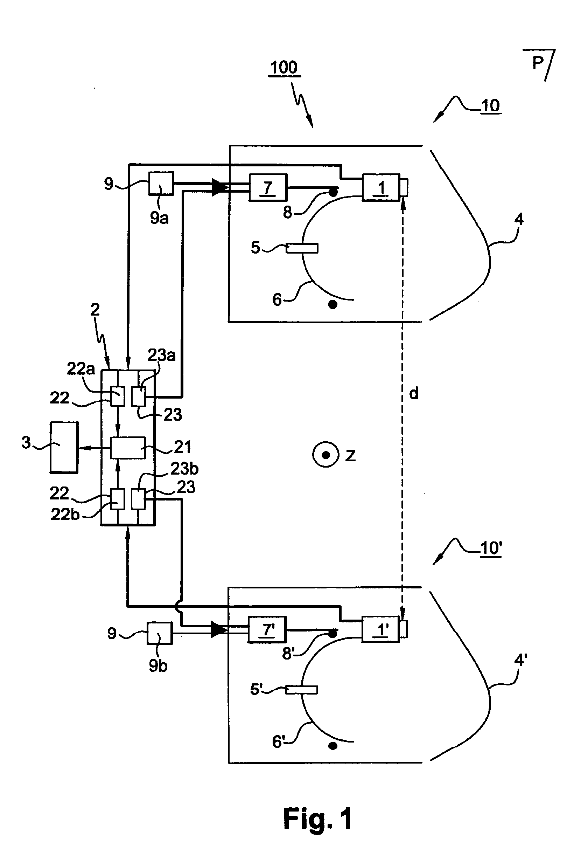

La figure 1 correspond à une représentation schématique de moyens d'éclairage 100 intégrant deux capteurs optiques d'un système d'imagerie stéréoscopique d'un dispositif de détection d'obstacle, conformément à un mode de réalisation préféré de l'invention.

Le système d'imagerie stéréoscopique est muni de deux capteurs optiques 1, 1' tels que des caméras, connectées à une unité de traitement d'images 2 comportant un calculateur 21 pour la stéréoscopie.

Les caméras 1, 1' sont par exemple adaptées à la prise de vue de nuit. Ce peut être, par exemple, des caméras infrarouges. Elles peuvent également travailler dans le domaine des longueurs d'ondes visibles.

Chaque caméra 1, 1' réalise des prises de vues instantanées et successives de la scène de route se déroulant devant le véhicule. Elle transmet ensuite ces prises de vues, ou images, à des moyens par exemple logiciels qui sont des moyens de recalages fin des images entre elles 22 insérés dans l'unité de traitement d'images 2 et par exemple dédoublés en deux éléments 22a, 22b.

Ensuite, les images ainsi recalées sont transmises au calculateur 21 qui calcule la position des objets situés dans le champ de visée et évalue leur mouvement relatif par rapport à la trajectoire du véhicule.

Le calculateur 21 pour la stéréoscopie fournit des signaux de consignes à des moyens de commande 3 de l'un ou plusieurs des moyens suivants (non représentés) :
- des moyens de gestion du mouvement du véhicule,
- des moyens pour l'anticipation de virage et des moyens de gestion de la position du véhicule par rapport aux bandes blanches,
- des moyens d'avertissement sonore,
- des moyens de commande d'un élément de sécurité active interne (pour les conducteurs et/ou passagers) et/ou externe (pour l'obstacle piéton par exemple),
- et des moyens d'avertissement visuels.

Ces moyens de commande 3 peuvent aussi être associés aux fonction même de l'éclairage ou de la signalisation, par exemple à des moyens de commutation automatique de lampes.

Par ailleurs, les moyens d'éclairage 100 comprennent des moyens gauches d'éclairage 10 et des moyens droits d'éclairage 10' qui sont par exemple des projecteurs à fonction virage de type DBL.

Chaque projecteur 10, 10' est muni classiquement d'une optique 4, 4' (glace de fermeture du projecteur et éventuellement d'autres pièces à rôle optique du type lentille) et d'une source de lumière 5, 5' montée sur un réflecteur mobile 6, 6' du projecteur 10, 10'.

L'une des caméras dite caméra gauche 1 est solidaire du réflecteur mobile gauche 6 et l'autre caméra dite caméra droite 1' est solidaire du réflecteur mobile droit 6'.

Dans cet exemple, les caméras 1, 1' sont montées directement sur les réflecteurs 6, 6'.

Les caméras 1, 1' sont espacées d'une distance d de préférence de l'ordre du mètre.

Les inconvénients de condensation rencontrés sur la face interne du pare-brise ou sur les objectifs des caméras sont soit reportés sur certaines zones de l'optique non fonctionnelles, soit simplement inexistants en raison de la présence de vernis anti-buée (non représenté).

Les projecteurs 10, 10' peuvent être nettoyés de manière identique au pare brise, grâce des lave-projecteurs (non représentés). Ainsi, les objectifs des cameras gauche et droite 1, 1' ne sont pas perturbées pas les éventuelles salissures présentes sur les optiques 4, 4'.

On veillera en outre à tenir compte de l'environnement thermique des projecteurs pour les caméras 1, 1'.

Le dispositif de détection d'obstacle peut être optimisé par exemple pour une distance de détection inférieure ou égale à trente mètres.

Les caméras 1, 1' ne sont pas directement liées mécaniquement entre elles dans une structure monolithique. L'imagerie stéréoscopique suppose les parallélismes d'orientation vertical et horizontal des deux caméras 1, 1' assurés par des moyens de synchronisation mécaniques automatiques qui créent ainsi une liaison virtuelle entre les caméras gauche et droite 1, 1'.

Les moyens de synchronisation mécaniques automatiques des caméras comprennent des moyens de gestion du calage vertical 9 et de gestion du calage horizontal des caméras 23 qui sont associés aux réglages automatiques de l'orientation verticale et de l'orientation horizontale des projecteurs

Aussi, les caméras gauche et droite 1, 1' vont conserver un champ de vision pratiquement constant, propice à des simplifications de traitement de données et à des gains en temps de réponse et sans redondance de moyens.

Chaque réflecteur 6, 6' est actionné par un système de moteurs 7, 7' associé à un dispositif de rotation 8, 8' de type rotule. Aussi, les réflecteurs 6, 6' sont mobiles en rotation dans le plan horizontal P et dans le plan vertical (représenté par l'axe Z sur la figure 1) et chaque caméra 1, 1' suit les mouvements du réflecteur associé 6, 6'.

Les moyens de gestion du calage vertical 9, par exemple dédoublés en deux éléments 9a, 9b, sont des moyens de gestion classiques de la commande d'orientation des réflecteurs 6, 6' de projecteurs DBL 10, 10'. Ces moyens 9 envoient aux systèmes à moteurs 7, 7' des signaux de consigne des déplacements angulaires horizontaux à faire subir aux réflecteurs droit et gauche 6, 6'.

L'unité de traitement d'images 2 comprend des moyens, par exemple logiciels, de gestion du calage horizontal 23 des caméras gauche et droite 1, 1'. Ces moyens 23 sont par exemple en dédoublés en deux éléments 23a, 23b. Chaque élément 23a, 23b est connecté et pilote un système de moteurs distinct 7, 7' respectivement en lui délivrant des signaux de consigne appropriés.

Chaque élément 23a, 23b des moyens de gestion du calage horizontal 23 comporte :
- des moyens de traitement d'images aptes à effectuer un traitement sur une ou sur deux images successives transmises par la caméra gauche ou droite 1, 1',
- des moyens de détermination des lignes d'horizon d'une image résultant du traitement d'image(s), par exemple à l'aide des moyens de détermination de lignes fuyantes (ou de segments de lignes fuyantes de taille suffisante pour être extrapolé),
- et des moyens de détermination de la coïncidence de la ligne d'horizon avec une ligne de consigne qui est la même pour les deux caméras.

Les moyens de calage horizontal 23 peuvent comprendre des microcalculateurs qui déterminent l'écart entre une lignes d'horizon mesurée et la ligne d'horizon de consigne afin de l'y ramener.

La ligne d'horizon mesurée est la ligne d'horizon déterminée pour la scène de route considérée. La ligne d'horizon de consigne est une ligne d'horizon prédéterminée lors d'une étape de réglage initiale des projecteurs 10, 10'. Autrement dit, la ligne d'horizon de consigne est déterminée de la même façon que la ligne d'horizon mesurée, mais dans des conditions initiales idéales, comme par exemple lors de la mise en circulation du véhicule ou lors d'un contrôle de routine du véhicule. Cette ligne de consigne est donc déterminée par un professionnel, pour un véhicule dont l'assiette est plate.

Le traitement des images prises par la caméra gauche 1' va maintenant être décrit en détail, à partir d'exemples d'images. Le traitement des images prises par la caméra droite 1' est similaire.

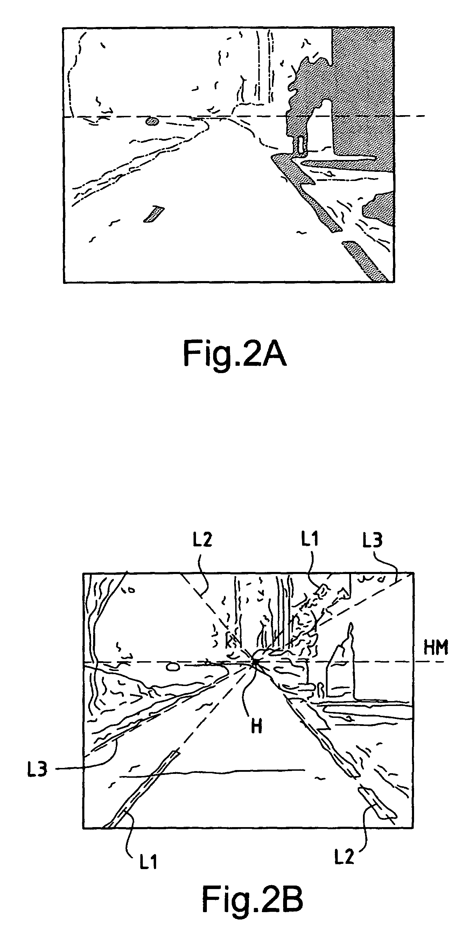

En particulier, les figures 2A et 2B montrent, respectivement, une image naturelle et une image traitée d'un exemple de scène de route se déroulant devant un véhicule.

La figure 2A représente une image prise de la caméra gauche 1 et appelée image naturelle, par opposition à l'image traitée montrée sur la figure 2B, ceci dans un cas classique de route relativement plate. La figure 2B montre la même scène de route que l'image 2A, mais après traitement par l'élément associé 23a des moyens de gestion du calage horizontal 23.

Au moins deux des images naturelles de la scène de route prises par la caméra gauche 1 sont transmises à l'élément associé 23a des moyens de gestion du calage horizontal 23. Ces images peuvent être deux images successives. Ce dernier élément 23a effectue une comparaison entre ces deux images naturelles.

Cette comparaison est une soustraction d'une des images par rapport à l'autre. Cette soustraction permet de retirer les zones constantes, c'est-à-dire les zones qui sont identiques sur la première et sur la seconde images. Autrement dit, l'image obtenue par soustraction des deux images naturelles permet de faire apparaître les zones qui ont bougé, c'est-à-dire les zones et tous les éléments liés à la vitesse du véhicule.

L'élément 23a effectuent ensuite un seuillage de l'image obtenue par soustraction. Ce seuillage consiste à supprimer tous les gris de l'image et à les remplacer par des blancs ou des noirs, en fonction des niveaux de gris initiaux. On obtient alors l'image traitée de la figure 2B.

Dans une variante, une seule image est traitée au moyen d'une transformée mathématique appliquée à chaque pixel de l'image ou à des ensembles de pixels de l'image. Cette transformée mathématique peut être, par exemple, la transformée de Hoegh.

Ensuite, l'image traitée résultant du traitement d'image(s) est étudiée afin d'en rechercher les lignes fuyantes ainsi que les points de convergence de ces lignes fuyantes. Ces lignes fuyantes se rejoignent à l'horizon. On détermine ainsi quel est l'horizon mesuré de la scène de route, c'est-à-dire l'horizon réel pour la situation dans laquelle se trouve le véhicule, à l'instant considéré.

Sur la figure 2B, on a référencé L1, L2 et L3 les lignes fuyantes de l'image traitée. Ces lignes fuyantes se rejoignent en un point d'horizon H. On déduit, à partir de ce point H, l'emplacement de la ligne d'horizon de consigne HC, qui est horizontale et qui passe par ce point H.

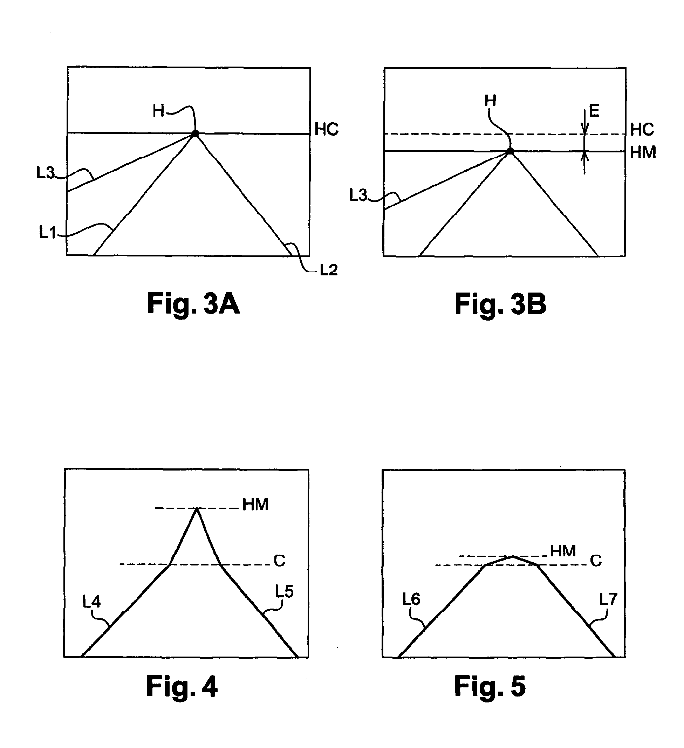

La figure 3A représente la même scène de route que celle de la figure 2B mais selon une représentation schématique. Cette figure 3A n'est pas une image réellement obtenue pendant le traitement d'images. C'est une figure uniquement destinée à mieux faire comprendre l'invention. Cette figure 3A montre les éléments importants relevés sur l'image de la figure 2B et, en particulier, les différentes lignes permettant d'appliquer la suite du procédé de l'invention. Ces lignes sont les lignes fuyantes L1, L2 et L3 qui se coupent au point d'intersection H. Par ce point H, passe la ligne d'horizon mesurée HM.

L'élément 23a permet de comparer la ligne d'horizon mesurée HM avec la ligne d'horizon de consigne HC prédéterminée. Dans le cas de la figure 3A, le ligne de consigne HC et la ligne mesurée HM sont confondues. On en déduit que le réglage du projecteur gauche est correct et qu'aucune correction de l'orientation de ce projecteur n'est nécessaire.

Dans le cas de la figure 3B, on voit que la ligne mesurée HM et la ligne de consigne HC sont séparées par un écart E. Comme la ligne d'horizon mesurée est en dessous de la ligne de consigne, on en déduit que le véhicule «pique du nez ».

En pratique, la ligne de consigne est déterminée comme étant située sur une des lignes de trame de la caméra. Ainsi, l'écart E est calculé en nombre de lignes de trame.

L'information relative à l'écart E est alors fournie au système de moteurs 7 qui modifie l'orientation verticale du projecteur 10 en le relevant jusqu'à ce que la ligne d'horizon mesurée soit confondue avec la ligne de consigne. Autrement dit, on modifie l'inclinaison du projecteur 10 et, donc de la source lumineuse 5, jusqu'à ce que l'écart E tende vers zéro. En pratique, l'écart E est converti en un signal de commande du système de moteurs 7 pour revenir à la valeur de consigne de la ligne d'horizon.

En pratique, la vérification du positionnement de la ligne d'horizon mesurée sur la ligne de consigne se fait au moyen de la caméra gauche 6, c'est-à-dire en visualisant, sur les images prises instantanément par la caméra, les deux lignes d'horizon HM et HC.

Sur la figure 4, on a représenté le cas particulier d'une route en fond de vallée. Ce cas est représenté d'une façon schématisée, comme l'étaient les exemples précédents des figures 3A et 3B. Le cas particulier schématisé par la figure 4 est le cas où le véhicule se trouve dans le fond d'une vallée et où il s'apprête à monter sur une colline ou une montagne. Dans cet exemple, la partie, qui est située en dessous de la ligne C en pointillés, montre la route qui se trouve dans le fond de la vallée et qui forme les lignes fuyantes L4 et L5. Au niveau de la ligne pointillée C, les lignes fuyantes L4 et L5 sont coupées, c'est-à-dire qu'elles forment un angle non plat avec les lignes fuyantes initiales. Cette coupure C des lignes fuyantes représente l'endroit où la route commence à monter, c'est-à-dire où la route présente une pente par rapport à la partie de route qui était plate dans le fond de la vallée. On voit d'après la figure 4, qu'il est possible de déterminer deux lignes d'horizon mesurées : Une ligne avec la partie des fuyantes située sous la coupure C et une ligne HM avec la partie des fuyantes située au-dessus de la coupure C. C'est cette dernière ligne d'horizon, c'est-à-dire celle mesurée dans la partie supérieure de l'image, que l'on prend en compte dans le cas d'un fond de vallée. Cette ligne d'horizon mesurée HM se détermine exactement de la même façon que dans le cas des figures 2 et 3.

Sur la figure 5, on a représenté, de façon schématique, le cas particulier d'un véhicule au sommet d'une côte. Dans ce cas, le véhicule se trouve en haut d'une côte et est prêt à aborder une route plate ou une route en pente descendante. Comme on le voit sur la figure 5, les lignes fuyantes L6 et L7 de la route en côte se coupent au niveau de la ligne C. Comme dans le cas précédent, il est possible en théorie de déterminer deux lignes d'horizon mesurées : Une ligne avec la partie des fuyantes située sous la coupure C et une ligne HM avec la partie des fuyantes située au-dessus de la coupure C. En pratique, c'est la ligne d'horizon mesurée dans la partie supérieure de l'image que l'on prend en compte dans le cas d'un sommet de côte. Cette ligne d'horizon mesurée HM se détermine exactement de la même façon que dans le cas des figures 2 et 3.

On comprend ainsi que, quelle que soit la géométrie de la route sur laquelle circule le véhicule, c'est-à-dire rectiligne ou en pente, la ligne d'horizon est toujours déterminable à partir des lignes fuyantes. Et dès lors que la ligne d'horizon mesurée est déterminée, l'orientation du projecteur peut être commandée.

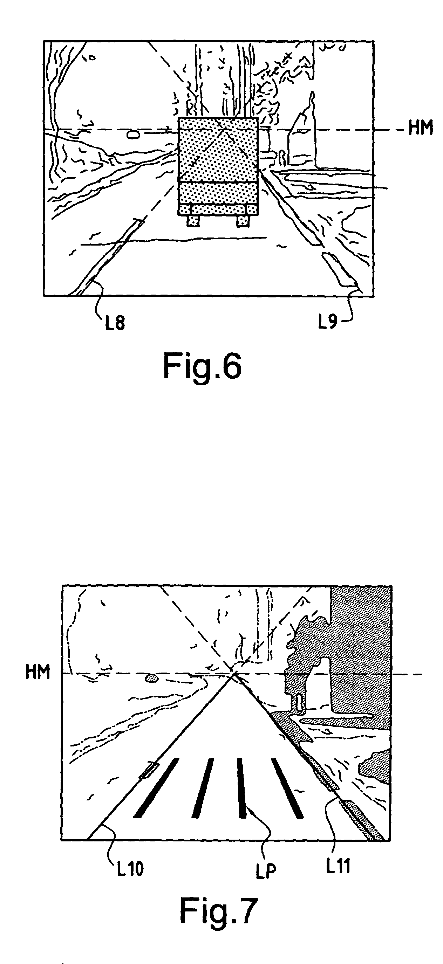

Sur la figure 6, on a représenté une situation particulière dans laquelle peut se trouver un véhicule. Cette situation est celle où un autre véhicule et en particulier un véhicule de taille relativement imposante du type poids lourd, circule sur la route devant le véhicule considéré. La figure 6 montre l'image obtenue après traitement, dans une telle situation. On voit que, dans ce cas, le camion a gêné la prise d'images de la scène de route. Aussi, l'image obtenue après traitement ne comporte qu'une partie des lignes fuyantes L8 et L9. Cependant, avec cette partie des lignes fuyantes détectées, situées entre le camion et le véhicule, il est possible d'extrapoler la suite de ces lignes fuyantes. Ces lignes extrapolées sont représentées en pointillés sur la figure 6, dans le prolongement des lignes fuyantes L8 et L9. La ligne d'horizon mesurée HM peut ensuite être déterminée, à partir de ces lignes fuyantes extrapolées, de la même façon qu'expliqué précédemment. On réalise ainsi une correction réaliste de l'image.

Cependant, cette extrapolation en cas d'obstacle peut entraîner une réduction de la précision de l'orientation du projecteur. Pour éviter cela, il est possible de conjuguer la détermination de la ligne d'horizon mesurée avec l'émission d'un point lumineux ou d'une figure, par une source lumineuse repérable sur une image vidéo. Ce procédé consiste, en effet, à émettre un dessin lumineux spécifique non visible à l'oeil nu pour le conducteur, mais repérable par la caméra soit par sa haute luminosité, soit grâce à une modulation particulière comme un clignotement. Cette source lumineuse peut être, par exemple, une source de rayons laser. Dans ce cas, la source lumineuse est montée dans le projecteur de façon à être solidaire du réflecteur mobile. Elle émet un faisceau qui contribue à la restitution des lignes fuyantes. De cette façon, l'orientation du projecteur est réglée en fonction d'une information prenant en compte, d'une part, l'écart E et, d'autre part, la forme du dessin spécifique. Cette information peut être obtenue par des calculs géométriques ou par les connaissances d'un réseau de neurones ayant effectué son apprentissage lors de séquences de visibilité sans obstacle.

Le dessin spécifique peut être, en particulier, un faisceau de lignes parallèles émis, par exemple, par un réseau de diffraction ou par une conjugaison de lentilles. Ce cas peut être mis en oeuvre en présence d'un obstacle ou bien dans des conditions de circulation difficiles comme un trafic dense.

Aussi, dans une variante (non représentée) du système de la figure 1, deux générateurs de lignes lumineuses sont montés sur les réflecteurs mobiles droit et gauche 6, 6'. De préférence, chaque générateur de lignes lumineuses est fixé à l'extrémité du réflecteur associé qui est opposée à la caméra. Chaque générateur de lignes lumineuses est dirigé vers l'avant proche du véhicule et orienté de façon à ce que les lignes lumineuses soient placées entre les lignes fuyantes L10 et L11.

On a représenté sur la figure 7 un exemple d'image traitée d'une scène de route, dans le cas où sont projetées des lignes parallèles conformément à la variante précitée. Cette figure 7 montre les lignes fuyantes L10 et L11 ainsi que les lignes projetées LP qui, sur l'image traitée, forment des segments de fuyantes qui contribuent, avec les lignes fuyantes L10 et L11, à déterminer la ligne d'horizon mesurée. La précision de la détermination de la ligne d'horizon est proportionnelle au nombre de lignes parallèles. De préférence, ces lignes parallèles sont émises pour être proches du véhicule, par exemple à quelques mètres devant le véhicule, afin de ne pas être altérées par la présence des véhicules précédents.

L'unité de traitement d'images 2 rassemblant les moyens 21, 22, 23 peut être intégrée en partie ou totalement dans l'ordinateur de bord du véhicule ou ajoutée dans le véhicule.

L'invention s'applique tout aussi bien à des projecteurs de feux de route, à des projecteurs FBL, ou encore à des projeteurs de signalisation situés par exemple à l'arrière du véhicule.

## Revendications

1. Dispositif de détection d'obstacle comportant un système d'imagerie stéréoscopique incluant deux capteurs optiques (1, 1') **caractérisé en ce que** les capteurs sont intégrés dans des moyens d'éclairage (100, 10, 10') et/ou de signalisation pour véhicule automobile.

2. Dispositif de détection d'obstacle selon la revendication 1 **caractérisé en ce que** la distance entre les capteurs optiques (1, 1') est choisie supérieure à 50 cm et de préférence supérieure ou égale à 1 mètre.

3. Dispositif de détection d'obstacle selon la revendication 1 ou 2 **caractérisé en ce que** les capteurs (1, 1') sont liés mécaniquement par une liaison virtuelle comprenant des moyens de synchronisation mécaniques (9, 23) et de préférence automatiques.

4. Dispositif de détection d'obstacle selon l'une des revendications 1 à 3 **caractérisé en ce que** l'un des capteurs optiques (1) est intégré dans des moyens d'éclairage (10) et/ou de signalisation gauches et l'autre des capteurs optiques (1') est intégré dans des moyens d'éclairage (10') et/ou de signalisation droits.

5. Dispositif de détection d'obstacle selon l'une des revendications 1 à 4 **caractérisé en ce que** l'un des capteurs optiques (1) est solidaire d'un réflecteur mobile (6) des moyens d'éclairage gauches (10) et l'autre des capteurs optiques (1') est solidaire d'un réflecteur mobile (6) des moyens d'éclairage droits (10').

6. Dispositif de détection d'obstacle selon l'une des revendications 1 à 5 **caractérisé en ce que** le dispositif comporte des moyens de gestion du calage vertical (9) des capteurs optiques (1, 1'), de préférence automatiques.

7. Dispositif de détection d'obstacle selon la revendication 6 **caractérisé en ce que**, lorsque les capteurs (1, 1') sont solidaires de réflecteurs mobiles en rotation dans le plan horizontal, des moyens de commande de la rotation (7, 7') dans le plan horizontal desdits réflecteurs sont pilotés par lesdits moyens de gestion du calage vertical (9).

8. Dispositif de détection d'obstacle selon l'une des revendications 1 à 7 **caractérisé en ce qu'**il comprend des moyens de correction d'images (22).

9. Dispositif de détection d'obstacle selon l'une des revendications 1 à 8 **caractérisé en ce qu'**il comprend des moyens de gestion du calage horizontal (23) des capteurs optiques (1, 1'), de préférence automatiques.

10. Dispositif de détection d'obstacle selon la revendication 9 **caractérisé en ce que** les moyens de gestion du calage horizontal (23) comportent des moyens de détermination des lignes d'horizon d'images de scènes de route prises par les capteurs et des moyens de détermination de la coïncidence desdites lignes d'horizon avec une ligne de consigne prédéterminée.

11. Dispositif de détection d'obstacle selon l'une des revendications 9 ou 10 **caractérisé en ce que** les moyens de détermination des lignes d'horizon comprennent des moyens de recherche d'au moins des segments extrapolables de lignes fuyantes des images et, de préférence, deux générateurs de lignes lumineuses, chacun associé à l'un distinct des capteurs (1, 1'), et orientés de façon à ce que les lignes lumineuses soient placées entre les lignes fuyantes des images.

12. Dispositif de détection d'obstacle selon l'une des revendications 9 à 11 **caractérisé en ce que**, lorsque les capteurs (1, 1') sont solidaires de réflecteurs mobiles en rotation dans le plan vertical, des moyens de commande de la rotation (7, 7') dans le plan vertical desdits réflecteurs (6, 6') sont pilotés par lesdits moyens de gestion du calage horizontal (23).

13. Dispositif de détection d'obstacle selon l'une des revendications 1 à 12 **caractérisé en ce que** les capteurs optiques (1, 1') sont choisis parmi des caméras et des systèmes à laser.

14. Dispositif de détection d'obstacle selon l'une des revendications 1 à 13 **caractérisé en ce qu'**il comprend des moyens de commande (3) de l'un ou plusieurs des moyens suivants : des moyens de gestion du mouvement du véhicule, des moyens pour l'anticipation de virage et des moyens de gestion de la position du véhicule par rapport aux bandes blanches.

15. Dispositif de détection d'obstacle selon l'une des revendications 1 à 14 **caractérisé en ce qu'**il comprend des moyens de commande (3) de l'un ou plusieurs des moyens suivants des moyens d'avertissement sonore, des moyens d'avertissement visuels, des moyens de réduction de l'éblouissement potentiel du conducteur, des moyens de commande d'un élément de sécurité active interne et/ou externe et des moyens de commutation automatique de lampes.
